**Europäisches Patentamt**

**European Patent Office**

**Office européen des brevets**

(19)

(11) Veröffentlichungsnummer: **0 039 855 B1**

(12) # EUROPÄISCHE PATENTSCHRIFT

(45) Veröffentlichungstag der Patentschrift:
08.08.84

(51) Int. Cl.³: **F 16 B 41/00**

(21) Anmeldenummer: **81103318.2**

(22) Anmeldetag: **02.05.81**

(54) **Vorrichtung zur Diebstahlsicherung von Kraftfahrzeugrädern.**

(30) Priorität: **08.05.80 DE 3017630**

(43) Veröffentlichungstag der Anmeldung:
**18.11.81 Patentblatt 81/46**

(45) Bekanntmachung des Hinweises auf die Patenterteilung:
**08.08.84 Patentblatt 84/32**

(84) Benannte Vertragsstaaten:
**AT BE CH DE FR GB IT LI NL SE**

(56) Entgegenhaltungen:
**AU - A - 18 463**
**DE - A - 1 955 131**
**DE - B - 2 617 798**
**DE - C - 344 933**
**FR - A - 2 091 401**

**Wohlfahrt, Baubeschlag Taschenbuch, 1979, S. 191**

(73) Patentinhaber: **DOM-Sicherheitstechnik GmbH & Co. KG, Wesselinger Strasse 10-16, D-5040 Brühl (DE)**

(72) Erfinder: **Wolter, Heinz, Meiswinkel 3, D-5067 Kürten (DE)**

(74) Vertreter: **Rieder, Hans-Joachim, Dr. et al, Corneliusstrasse 45 Postfach 11 04 51, D-5600 Wuppertal 11 (DE)**

## Beschreibung

Die Erfindung betrifft eine Vorrichtung zur Diebstahlsicherung von Kraftfahrzeugrädern gemäß Oberbegriff des Anspruchs 1.

Eine derartige Vorrichtung ist bekannt aus der AU-A-18 463, wobei der äußere Stirnrand der Büchse mit demjenigen der Radmutter bündig abschließt. Beide Stirnräder werden überfangen von einem Bund des in die Radmutter eintretenden Schließzylinders. Beim Anbringen bzw. Abnehmen der Vorrichtung müssen jeweils der Schließzylinder und Büchse nacheinander gehandhabt werden.

Die DE-A-1 955 131 beschreibt einen Schließzylinder mit Schlüsselabzugssicherung, wobei an den Schlüsselschmalkanten im Bereich zwischen Schlüsselschaft und Schlüsselhandhabe zwei sich gegenüberliegende Nasen vorgesehen sind, die mit einem drehbar am Schließzylindergehäuse gelagerten Schleppring zusammenwirken. Letzterer kann in eine solche Lage gedreht werden, daß die Nasen hinter Schultern des Schleppringes liegen. Der Schlüssel läßt sich dann nicht abziehen. Wird der Schleppring so gedreht, daß die Nasen mit Durchtrittsschlitzen des Schleppringes fluchten, ist der Schlüssel abziehbar.

Dem Gegenstand der Erfindung liegt die Aufgabe zugrunde, eine Vorrichtung der vorausgesetzten Gattung in herstellungstechnisch einfacher Weise gebrauchsvorteilhafter auszugestalten derart, daß das Montieren und Demontieren der Büchse nebst Schließzylinder im Wege der Einhandbedienung leicht durchführbar ist.

Gelöst wird diese Aufgabe durch die Merkmale des kennzeichnenden Teils des Anspruchs 1.

Zufolge derartiger Ausgestaltung ist eine gattungsgemäße Vorrichtung zur Diebstahlsicherung von Kraftfahrzeugrädern von erhöhtem Gebrauchswert angegeben. Büchse und Schließzylinder bilden eine Baueinheit, die mittels des in den Schließzylinder eingeführten Schlüssels einfach auf den Mehrkantkopf der Radmutter aufschiebbar als auch davon abnehmbar ist. Bedingt durch das Zusammenfassen von Büchse und Schließzylinder zu einer Baueinheit können bei der Montage bzw. Demontage Teile weniger leicht verlorengehen. Wird die Büchse mit dem Schließzylinder auf den Mehrkantkopf aufgeschoben, ist zuvor der Schlüssel in den Schließzylinder einzustecken, und zwar bei in Grundstellung befindlichem Schließzylinder. Nach Aufschieben der Büchse mit dem in ihr gelagerten Schließzylinder und Abziehen des Schlüssels ist bereits die Büchse nebst Schließzylinder an dem Mehrkantkopf drehbar, jedoch nicht abziehbar. Soll die Demontage der Büchse mit Schließzylinder erfolgen, ist der Schließzylinder mittels des Schlüssels in die Grundstellung zu bringen. Danach ist der Schlüssel zu verdrehen, wobei dessen Nase hinter die Schulter der Büchse tritt. Durch Zug am Schlüssel erfolgt dann eine Mitnahme der Büchse einschließlich Schließzylinder und deren Abziehen von dem Mehrkantkopf der Radmutter. Dieses Abziehen bzw. Anbringen kann dabei leicht im Wege der Einhandbedienung erfolgen. Da die Büchse und der Schließzylinder zu einer Baueinheit zusammengefaßt sind, besteht auch weniger die Verschmutzungsgefahr bei einem Demontieren der Büchse. Ein weiterer Vorteil ist darin zu sehen, daß der zur axialen Lagesicherung des eingesetzten Schließzylinders dienende Federring gleichzeitig dazu ausgenutzt ist, die Schulter zu bilden. Der sowieso vorhandene Querschlitz des Federringes gestattet den Durchgang der Nase des Schlüssels beim Einstecken desselben in den Schließzylinder.

Damit der Schließzylinder weitgehend vor Verschmutzung verschont bleibt, ist die Maßnahme gemäß Anspruch 2 vorgesehen.

Zu einer weiteren Sicherung vor Verschmutzung trägt die Maßnahme nach Anspruch 3 bei. Daher kann auch aus Richtung des Mehrkantkopfes keine Verschmutzung auftreten.

Um eine lagerungstechnisch günstige, stabile Bauform zu erreichen, wird die Vorrichtung nach Anspruch 4 ausgebildet.

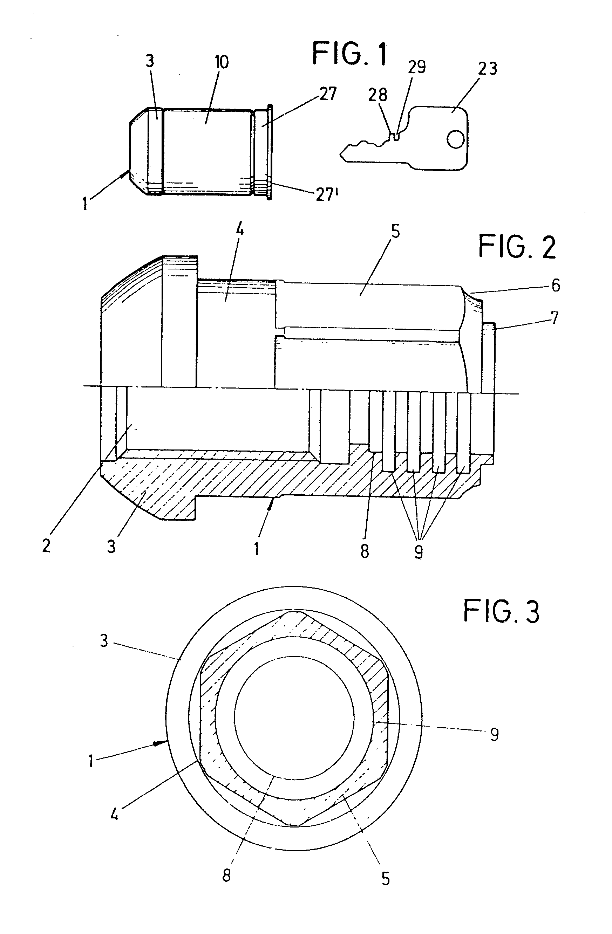

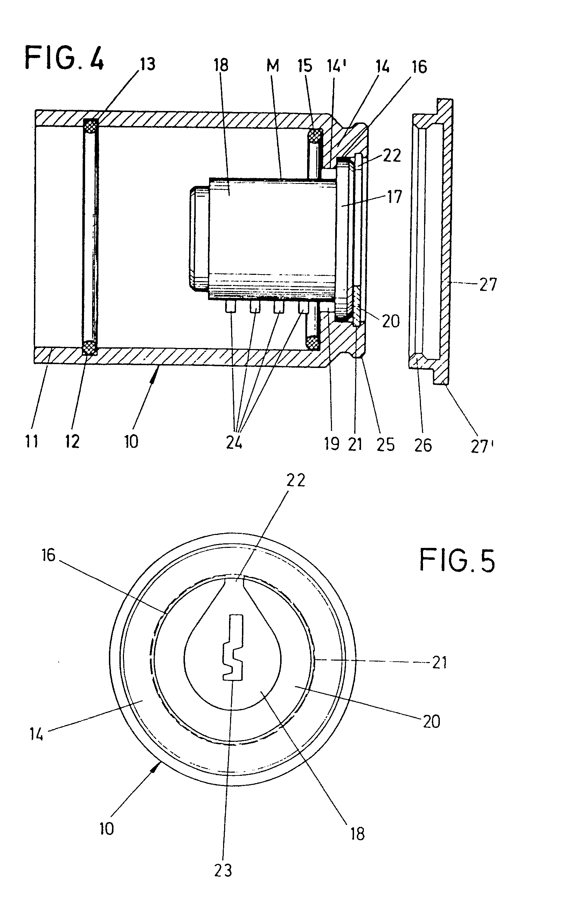

Nachstehend wird ein Ausführungsbeispiel der Erfindung anhand der Fig. 1 bis 10 erläutert. Es zeigt

Fig. 1 eine Ansicht in etwa natürlichem Maßstab der zusammengesetzten Vorrichtung nebst Schlüssel,

Fig. 2 in vergrößerter Darstellung die Radmutter teils in Ansicht, teils im Längsschnitt,

Fig. 3 einen Querschnitt durch den Mehrkantkopf im Bereich einer Ringnut,

Fig. 4 einen Längsschnitt durch die den Schließzylinder aufnehmende Büchse nebst zugehöriger Schutzkappe,

Fig. 5 eine Stirnansicht gegen die Büchse bei in Grundstellung befindlichem Schließzylinder,

Fig. 6 einen Längsmittelschnitt durch die zusammengefügte Vorrichtung bei aufgesetzter Schutzkappe,

Fig. 7 einen Querschnitt durch die Vorrichtung im Bereich einer Ringnut bei in dieser befindlicher Zuhaltung,

Fig. 8 einen der Fig. 6 entsprechenden Längsschnitt, jedoch bei abgenommener Schutzkappe und eingestecktem Schlüssel,

Fig. 9 den Schnitt nach der Linie IX-IX in Fig. 8, jedoch bei aus der Grundstellung verdrehtem Schlüssel und damit Schließzylinder und

Fig. 10 den Schnitt nach der Linie X-X in Fig. 9.

Die Vorrichtung besitzt eine Radmutter 1, welche mit ihrem Innengewinde 2 einen nicht dargestellten Schraubbolzen überfängt. Mit einem verdickt und ballig ausgebildeten Bund 3 greift die Radmutter 1 zentrierend in die am Rad vorgesehene Höhlung ein. Dem Bund 3 fügt sich ein zylindrischer Abschnitt 4 an, welcher in den Mehrkantkopf 5 übergeht. Bezüglich desselben handelt es sich um einen Sechskantkopf. Die Stirnseite des Mehrkantkopfes 5 bildet eine Kehle 6 aus. Jenseits dieser Kehle weist sodann der Mehrkantkopf 5 einen vorstehenden Kragen 7 auf.

In Verlängerung des Innengewindes 2 ist in der Radmutter 1 eine Höhlung 8 vorgesehen, von der beim Ausführungsbeispiel 4 parallel und in gleichem Abstand zueinanderliegende Ringnuten 9 ausgehen.

Die auf den Mehrkantkopf 1 aufzusetzende Büchse trägt die Bezugsziffern 10. Deren Innendurchmesser ist dem Außendurchmesser des zylindrischen Abschnitts 4 bzw. des Eckmaßes des Mehrkantkopfes 5 angepaßt. Am einsteckseitigen Ende geht von der Büchsenhöhlung 11 eine Ringnut 12 aus, in der ein Dichtungs-O-Ring 13 einliegt. Am anderen Ende der Büchsenhöhlung 11 befindet sich eine Schulter 14, an welcher sich ein weiterer Dichtungs-O-Ring 15 abstützt. Die Dichtungsfunktion kann auch durch einen einzelnen Dichtungsring erzielt sein, welcher sich über die ganze Länge zwischen den Dichtungsstellen 13 und 15 erstreckt und welcher mit einem Wulst in die Ringnut 12 eintritt. Die Schulter 14 bildet eine Lageröffnung 16 für den Bund 17 eines Schließzylinders 18 aus. Zwischen der Mantelfläche M desselben und einer Flanke 14' der Schulter 14 wird eine Ringöffnung 19 gebildet.

Zur axial unverschieblichen Halterung des Schließzylinders 18 in der Büchse dient ein Federring 20. Dieser ist stirnseitig des Bundes 17 in eine von der Lageröffnung 16 ausgehenden Ringnut 21 der Schulter 14 eingelassen. Der Federring enthält einen Querschlitz 22, der etwas größer ist als die Schlüsseldicke.

Bei nicht eingeführtem Schlüssel 23 überragen die Zuhaltungen 24 die Mantelfläche des Schließzylinders 18.

Die Büchse 10 formt an ihrem freien Ende einen Ringwulst 25, der mit einer Klipsschulter 26 einer im Querschnitt topfförmigen Schutzkappe 27 zusammenwirkt. Versehen ist diese mit einem randseitigen Griffbund 27'.

Der zum Schließzylinder 18 zugehörige Schlüssel 23 ist an seiner den Zuhaltungsvertiefungen benachbarten Schlüsselschmalkante mit einem eine Nase 28 bildenden Einschnitt 29 ausgestattet. Bei in den Schlüsselschlitz 30 eingestecktem Schlüssel 23 liegt der Einschnitt 29 auf Höhe des Federringes 20.

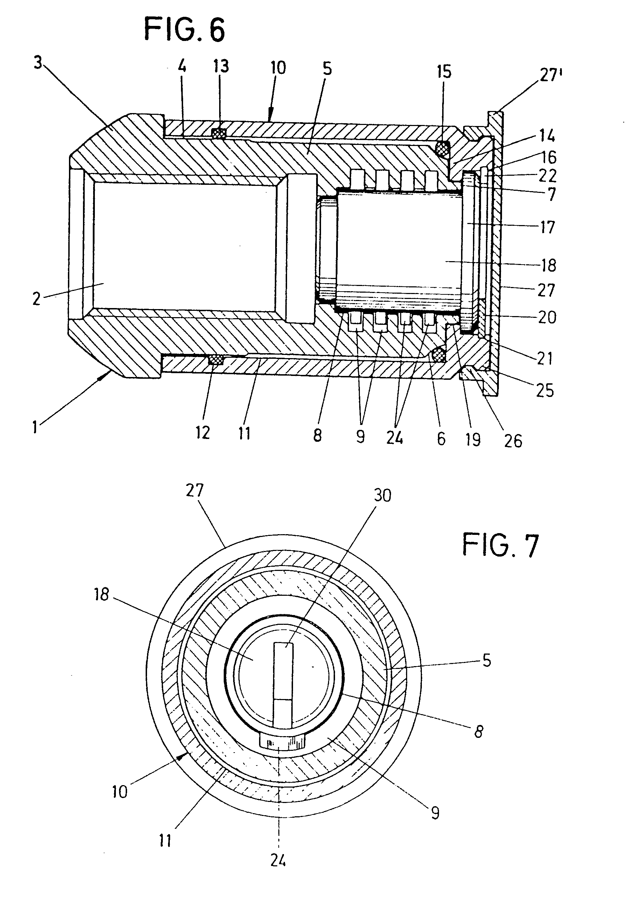

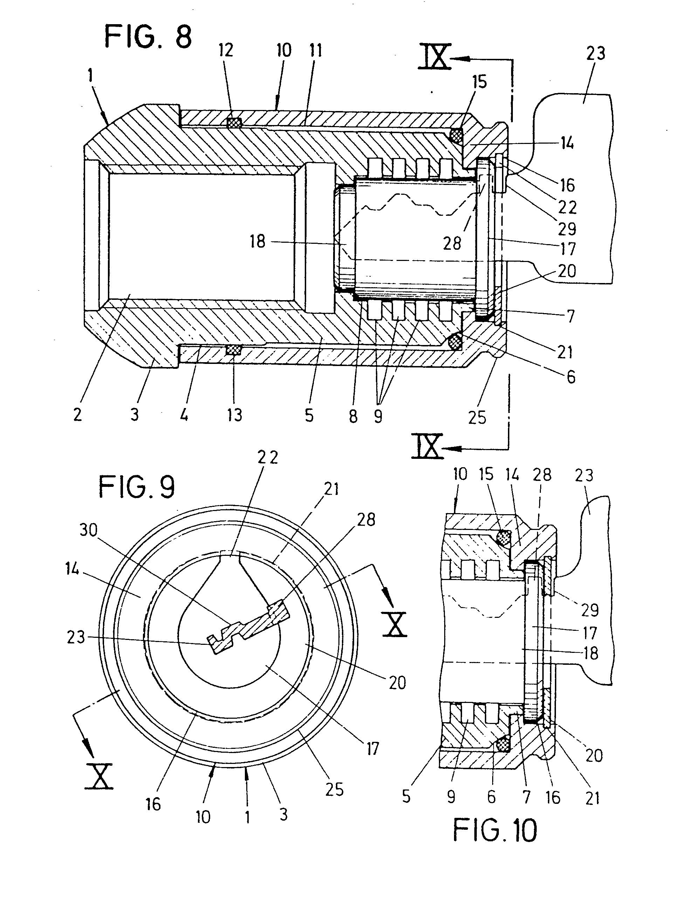

Ist die Radmutter 1 auf einen Schaubbolzen aufgedreht worden und soll sie gegen Abdrehen gesichert werden, ist bei in den Schließzylinder 18 eingeschobenem Schlüssel 23 die Büchse 10 auf den Mehrkantkopf aufzuschieben. Dies ist möglich, weil dann die Zuhaltungen 24 die Lage gemäß Fig. 8 einnehmen. Begrenzt ist die Aufsteckbewegung der Büchse 10 durch ihren stirnseitigen, gegen den Bund 3 tretenden Rand und durch die gegen das freie Stirnende des Mehrkantkopfes 5 tretende Schulter 14 der Büchse 10. In dieser Stellung umfängt der Dichtungs-O-Ring 13 den zylindrischen Abschnitt 4 jenseits des Mehrkantkopfes 5, während der andere Dichtungs-O-Ring 15 in der stirnseitigen Kehle 6 des Mehrkantkopfes 5 einliegt. Sodann ist der vorstehende Kragen 7 des Mehrkantkopfes 5 in die Ringöffnung 19 zwischen der Seitenflanke 14' der Schulter 14 und der Mantelfläche M des Schließzylinders 18 eingtaucht. Ferner liegen die Zuhaltungen 24 in der Ebene der Ringnuten 9 des Mehrkantkopfes 5. Wird nun der Schlüssel 23 aus dem Schlüsselschlitz 30 abgezogen, steuern die Zuhaltungen 24 über die Mantelfläche M des Schließzylinders 18 und tauchen in die Ringnuten 9 ein. Die Büchse 10 läßt sich nun zusammen mit dem Schließzylinder 18 drehen, jedoch nicht vom Mehrkantkopf 5 abziehen. Auch ist eine Drehbewegung des Schließzylinders 18 in Relation zur Büchse 10 möglich. Es kann nun die Schutzkappe 27 aufgesteckt werden, deren Klipsschulter 26 den Ringwulst 25 der Büchse 10 überfängt, vergl. Fig. 6.

Soll die Büchse 10 nebst Schließzylinder 18 demontiert werden, ist zuvor die Schutzkappe 27 abzunehmen. Danach hat das Einstecken des Schlüssels 23 in den Schlüsselschlitz 30 des Schließzylinders 18 zu erfolgen. Das vollständige Einstecken des Schlüssels ist nur in der Grundstellung des Schließzylinders möglich, in welcher der Schlüsselschlitz 30 mit dem Querschlitz 22 des Federrings 20 fluchtet. Dann erst tritt die Nase 28 hinter die Ebene des Federrings 20 bzw. der von diesem gebildeten Schulter. Nun ist der Schlüssel 23 mit Schließzylinder 18 zu verdrehen, bspw. in die Lage gemäß Fig. 9 und 10. Die Nase 28 liegt somit hinter der Schulter bzw. dem Federring 20. Wird nun ein Zug am Schlüssel 23 ausgeübt, nimmt die Nase 28 über die Schulter — Federring 20 — die Büchse 10 mit und zieht diese von dem Mehrkantkopf. Diese Handhabung ist ebenso wie das Aufstecken der Büchse im Wege der Einhandbetätigung leicht durchführbar.

Anstelle einer Ausbildung als Radmutter kann es sich auch um eine Radschraube handeln.

## Patentansprüche

1. Vorrichtung zur Diebstahlsicherung von Kraftfahrzeugrädern mit einer den Mehrkantkopf (5) einer Radmutter oder -schraube (1) überfangenden Büchse (10), in welcher ein Schließzylinder (18) drehbar angeordnet ist, dessen über die Mantelfläche (M) des Zylinders vortretende, in Diebstahlsicherungsstellung in Ringnuten (9) an der Innenwand des Mehrkantkopfes eintretende Zuhaltungen (24) durch Einstecken des Schlüssels (23) in eine aus den Ringnuten zurückgezogene Lage einstellbar sind, dadurch gekennzeichnet, daß die Büchse (10) den Schließzylinder (18) drehbar lagert und Schlüssel (23) eine in der Ebene des Schlüsselschlitzes (30) liegende Nase (28) aufweist, die bei eingestecktem und aus der Grundstellung verdrehtem Schlüssel (23) hinter eine ringförmige Schulter der Büchse (10) tritt, welche Schulter von einem in eine Ringnut (21) der Büchse (10) eingesprengten, den Schließzylinder (18) in der Büchse (10) gegen Herausziehen fesselnden Federring (20) gebildet ist, der einen Querschlitz (22) aufweist.

2. Vorrichtung nach Anspruch 1, dadurch gekennzeichnet, daß die Stirnfläche der Büchse (10) von einer aufgeklipsten Schutzkappe (27) abgedeckt ist.

3. Vorrichtung nach Anspruch 1, dadurch gekennzeichnet, daß an der Innenwand der Büchse (10) Dichtungs-O-Ringe (13, 15) vorgesehen sind, die sich an einer stirnseitigen Kehle (6) des Mehrkantkopfes (5) bzw. an einem zylindrischen Abschnitt (4) jenseits des Mehrkantkopfes (5) anlegen.

4. Vorrichtung nach Anspruch 1, dadurch gekennzeichnet, daß der Mehrkantkopf (5) an seinem freien Ende in einen vorstehenden Kragen (7) übergeht, der in eine Ringöffnung (19) eintaucht, die gebildet ist von der Seitenflanke (14') einer Schulter (14) der Büchse (10) und der Mantelfläche (M) des Schließzylinders (18).

## Claims

1. Device for securing motor vehicle wheels against theft, comprising a polygonal head (5), a sleeve (10) enveloping the wheel nut or screw (1), inside of which sleeve is rotatably mounted a lock cylinder (18) the tumblers (24) of which protrude beyond the circumference (M) of the cylinder and, when in an anti-theft position, enter into annular grooves (9) provided on the inside wall of the polygonal head the tumblers being movable by inserting the key (23) to a position, in which they are withdrawn from the annular grooves, characterised in that the lock cylinder (18) is rotatably mounted inside the sleeve (10) and the key (23) comprises a projection (28) which lies in the plane of the key slot (30) when the key (23) is inserted therein and which when the key (23) is turned from the normal position engages behind an annular shoulder of the sleeve (10) formed by a circlip (20) locked into an annular groove (21) retaining the lock cylinder (18) within the sleeve (10) against withdrawal, the circlip (20) being provided with a cross-slit (22).

2. Device according to claim 1, characterised in that the end face of the sleeve (10) is covered by a clip-on protective cap (27).

3. Device according to claim 1, characterised in that on the inside wall of the sleeve (10) are provided sealing O-rings (13, 15) which rest against a chamfer (6) at the one end of the polygonal head (5) or against a cylindrical section (4) at the opposite end of the polygonal head (5).

4. Device according to claim 1, characterised in that the polygonal head (5) provides at its free end a protruding collar (7) which enters into an annular opening (19) formed by the side flank (14') of a shoulder (14) of the sleeve (10) and the circumference (M) of the lock cylinder (18).

## Revendications

1. Dispositif pour protéger contre le vol les roues d'automobiles, comportant une douille (10) recouvrant la tête polygonale (5) d'un écrou ou d'un boulon (1) de roue, dans laquelle est disposé rotatif un cylindre de fermeture (18), des arrêts (24) pouvant s'engager, en s'avançant audelà de la surface enveloppante (M) du cylindre, en position de protection contre le vol, dans des gorges (9) annulaires, pratiquées dans la paroi intérieure de la tête polygonale, et pouvant être amenés, en enfonçant la clef dans une position où ils sont ramenés en arrière, hors des gorges annulaires, dispositif caractérisé en ce que la douille (10) loge le cylindre de fermeture (18) en le laissant tourner, et la clef (23) porte un ergot (28) qui se trouve dans le plan de la fente (30) destinée à la clef et qui s'engage, quand la clef (23) est enfoncée et tournée en dehors de sa position normale, derrière un épaulement annulaire de la douille (10) qui est formé par une rondelle élastique (20) engagée dans une gorge (21) annulaire de la douille (10), empêchant de retirer le cylindre de fermeture (18) de la douille (10), et présentant une fente transversale (22).

2. Dispositif suivant la revendication 1, caractérisé en ce que la face frontale de la douille (10) est recouverte par un chapeau de (protection 27) à encliquetage.

3. Dispositif suivant la revendication 1, caractérisé en ce que la paroi intérieure de la douille (10) est pourvue de joints toriques (13, 15), qui s'appliquent sur une cannelure côté avant (6) de la tête polygonale (5), ou sur une section cylindrique (4) audelà de la tête polygonale (5).

4. Dispositif suivant la revendication 1, caractérisé en ce que la tête polygonale (5) se transforme à son extrémité libre en un col (7) faisant saillie, en s'enfonçant dans une ouverture circulaire (19), qui est formée par le flanc latéral (14') d'un épaulement (14) de la douille (10) et de la surface enveloppante (M) du cylindre de fermeture (18).

FIG. 1

FIG. 2

FIG. 3

# FIG. 4

# FIG.5

0 039 855

# FIG. 6

# FIG. 7

9

# FIG. 8

# FIG. 9

# FIG. 10